# EUROPÄISCHE PATENTSCHRIFT

(11) **EP 3 628 892 B1**
(45) Veröffentlichungstag und Bekanntmachung des Hinweises auf die Patenterteilung: **06.10.2021**
(21) Anmeldenummer: 19194550.0
(22) Anmeldetag: 30.08.2019
(51) Int. Cl.: F16H 55/00, F16H 55/17, F16H 55/36, F16H 55/30, A47J 43/07

(54) **ROLLE FÜR EINEN ZUGMITTELTRIEB**
ROLLER FOR A BELT DRIVE
BOBINE POUR UN TRANSMISSION À LIEN SOUPLE

(30) Priorität: 25.09.2018 DE 102018216302
(43) Veröffentlichungstag der Anmeldung: 01.04.2020
(73) Patentinhaber: BSH Hausgeräte GmbH, 81739 München (DE)
(72) Erfinder: Potocnik, David, 3214 Zrece (SI); Slatinsek, Blaz, 3342 Gornji Grad (SI); Berzelak, Matej, 3334 Luce (SI)

(56) Entgegenhaltungen:
- KR-A- 20110 041 120
- KR-A- 20140 014 585
- US-A- 4 741 224
- US-A1- 2018 172 132

## Beschreibung

### Gebiet der Erfindung

Die Erfindung betrifft eine Rolle mit einer Führungsscheibe, die einen entlang des Umfangs vorgesehenen Auflagebereich zur Führung eines Zugmittels aufweist. Des Weiteren betrifft die Erfindung einen Zugmitteltrieb mit einer ersten Rolle, einer zweiten Rolle und einem Zugmittel. Darüber hinaus betrifft die Erfindung ein Küchengerät, welches einen Zugmitteltrieb aufweist.

### Hintergrund der Erfindung

In dem europäischen Patent EP 0 570 685 B1 ist eine Küchenmaschine beschrieben. Die Vielzweckküchenmaschine besteht aus einem Elektromotor, über dessen Antriebswelle zwei in einer Achse gelagerte und mit unterschiedlichen Drehzahlen sich drehende Abtriebswellen angetrieben werden. Sowohl die Antriebswelle als auch beide Abtriebswellen weisen entsprechende Riemenscheiben auf, die über je einen Riemen in Drehverbindung stehen. Beide Abtriebswellen sind auf einer gemeinsamen Achse gelagert. Die Riemenspannung zwischen der Antriebswelle und der ersten Abtriebswelle erfolgt durch eine relative Parallelverschiebung zwischen der Antriebswelle und der gemeinsamen Achse und der anschließenden Fixierung in der die notwendige Riemenspannung abgebenden Lage. Dabei erfolgt die Riemenspannung zwischen der Antriebswelle und der zweiten Abtriebswelle durch einen die Führung des zweiten Riemens umlenkenden Riemenspanner. Die Länge des zweiten Riemens ist dabei so bemessen, dass nach Einstellung der Riemenspannung des ersten Riemens die Spannung des zweiten Riemens durch eine innerhalb seines Arbeitsbereiches liegende Bewegung und anschließende Fixierung des Riemenspanners erfolgen kann. Durch Ringwülste an den Zahnriemenscheiben wird verhindert, dass einer der Zahnriemen von den Zahnriemenscheiben abgleitet.

### Der Erfindung zugrundeliegende Aufgabe

Der Erfindung liegt die Aufgabe zugrunde, eine Rolle zur Führung eines Zugmittels bereitzustellen, die eine zuverlässige Führung des Zugmittels ermöglicht. Darüber hinaus ist es Aufgabe der Erfindung, eine Rolle zur Führung eines Zugmittels bereitzustellen, die wartungsfreundlich ist und kostengünstig gefertigt werden kann.

### Erfindungsgemäße Lösung

Die Bezugszeichen in sämtlichen Ansprüchen haben keine einschränkende Wirkung, sondern sollen lediglich deren Lesbarkeit verbessern.

Die Lösung der gestellten Aufgabe gelingt durch eine Rolle, welche eine Führungsscheibe mit einem entlang des Umfangs vorgesehenen Auflagebereich zur Führung eines Zugmittels aufweist. Die Rolle umfasst ein Begrenzungsstegelement, das auf eine erste Stirnseite der Führungsscheibe aufgesteckt ist. Das Begrenzungsstegelement weist einen Stegbereich auf, der sich über den Radius des Auflagebereichs hinaus radial nach außen erstreckt. An dem Begrenzungsstegelement ist mindestens ein Rastelement und an der Führungsscheibe ist mindestens ein Gegenrastelement vorgesehen, wobei das mindestens eine Rastelement dazu ausgelegt ist, beim Aufstecken des Begrenzungsstegelements auf die erste Stirnseite der Führungsscheibe mit mindestens einem der Gegenrastelemente zu verrasten.

Unter einer Führungsscheibe im Sinne der vorliegenden Erfindung ist jedes scheibenförmige Führungselement zu verstehen, das einen entlang des Umfangs vorgesehenen Auflagebereich zur Führung eines Zugmittels aufweist. Dabei kann der Innenbereich der Führungsscheibe beliebig ausgebildet sein. Insbesondere kann der Innenbereich der Führungsscheibe eine beliebig ausgebildete innere Stützanordnung zur Abstützung des Auflagebereichs aufweisen. Die Führungsscheibe kann also eine beliebige innere Stützkonstruktion aufweisen, sodass die Führungsscheibe nicht notwendigerweise definiert ausgebildete Stirnflächen aufweisen muss. Der Auflagebereich der Führungsscheibe kann beispielsweise als durchgängig umlaufender Auflagebereich ausbildet sein. Der Auflagebereich kann beispielsweise auch als nicht durchgängig ausgebildeter Auflagebereich ausgestaltet sein, der eine Mehrzahl von entlang des Umfangs angeordneten Auflagebereichsabschnitten umfasst, zwischen denen Lücken ausgebildet sein können. Erfindungsgemäß wird auf eine der Stirnseiten der Führungsscheibe ein Begrenzungsstegelement aufgesetzt, welches einen Stegbereich aufweist. Der Stegbereich ist dazu ausgebildet, das Zugmittel seitlich zu führen und zurückzuhalten, sodass ein axiales Verrutschen des Zugmittels verhindert werden kann. Dadurch kann verhindert werden, dass durch ein Abrutschen des Zugmittels in axialer Richtung die Drehmomentübertragung beeinträchtigt wird. Außerdem kann ein Verschleiß des Zugmittels und der Rolle vermieden werden.

Erfindungsgemäß wird das Begrenzungsstegelement mittels eines Rastmechanismus an der Führungsscheibe befestigt. Das Begrenzungsstegelement weist mindestens ein Rastelement auf, das dazu ausgelegt ist, mit mindestens einem auf Seiten der Führungsscheibe vorgesehenen Gegenrastelement zu verrasten. Durch diese Verrastung ist eine stabile Befestigung des Begrenzungsstegelements an der Führungsscheibe möglich. Die Rastelemente ermöglichen eine einfache und schnelle Montage der Rolle und einen zuverlässigen zentrierten Sitz des Begrenzungsstegelements auf der Führungsscheibe. Das Begrenzungsstegelement kann auf einfache Weise abgenommen und ausgewechselt werden und ermöglicht einen Zugang zum Zugmittel. Darüber hinaus besteht die Möglichkeit, das mindestens eine Rastelement beispielsweise federnd auszubilden, sodass seitlich auftretende Kräfte durch die elastische Verformung des mindestens einen Rastelements aufgenommen werden können. Die aus Führungsscheibe und Begrenzungsstegelement aufgebaute Rolle kann kostengünstig hergestellt werden.

Die Lösung der gestellten Aufgabe gelingt außerdem durch einen Zugmitteltrieb, welcher eine erste Rolle umfasst, die mit einer ersten Welle drehfest verbunden ist, und eine zweite Rolle umfasst, die mit einer zweiten Welle drehfest verbunden ist. Darüber hinaus umfasst der Zugmitteltrieb ein Zugmittel, das dazu ausgelegt ist, ein Drehmoment von der ersten Rolle zur zweiten Rolle zu übertragen, wobei es sich bei mindestens einer von der ersten Rolle und der zweiten Rolle um eine Rolle wie oben beschrieben handelt. Durch das abnehmbare Begrenzungsstegelement wird ein vereinfachter Zugang zum Zugmittel ermöglicht. Dadurch wird die Wartung des Zugmitteltriebs erleichtert.

Die Lösung der gestellten Aufgabe gelingt außerdem durch ein Küchengerät, welches einen Zugmitteltrieb wie oben beschrieben aufweist. Durch den Zugmitteltrieb erfolgt innerhalb des Küchengeräts, beispielsweise innerhalb einer Küchenmaschine, eine Drehmomentübertragung von der Antriebswelle zur angetriebenen Welle. Das aufsteckbare Begrenzungsstegelement erleichtert die Wartung der Rollen und des Zugmittels.

### Bevorzugte Ausgestaltungen der Erfindung

Vorteilhafte Aus- und Weiterbildungen, welche einzeln oder in Kombination miteinander eingesetzt werden können, sind Gegenstand der abhängigen Ansprüche und der nachfolgenden Beschreibung.

Vorzugweise ist das Begrenzungsstegelement an der ersten Stirnseite der Führungsscheibe lösbar angebracht. Dies erleichtert die Wartung des Zugmitteltriebs. Insbesondere werden der Ausbau und der Austausch des Zugmittels erleichtert. Darüber hinaus ist es möglich, das Begrenzungsstegelement bei Verschleiß zu ersetzen.

Es ist bevorzugt, wenn das Begrenzungsstegelement ausschließlich durch das Zusammenwirken von Rastelementen und Gegenrastelementen an der ersten Stirnseite der Führungsscheibe befestigt ist. Durch den Rastmechanismus wird eine ausreichend stabile Befestigung ermöglicht. Weiter vorzugsweise ist das Begrenzungsstegelement ohne Schraubverbindungen an der ersten Stirnseite befestigt.

Vorzugsweise ist das Begrenzungsstegelement dazu ausgelegt, das auf dem Auflagebereich der Führungsscheibe geführte Zugmittel zurückzuhalten. Insbesondere kann das Begrenzungsstegelement seitlich einwirkende Kräfte des Zugmittels aufnehmen und so ein Abrutschen des Zugmittels in axialer Richtung verhindern.

Es ist bevorzugt, wenn es sich bei der Rolle um eine rotierbar gelagerte Rolle handelt. Vorzugsweise ist das Begrenzungsstegelement koaxial zur Führungsscheibe angeordnet.

Gemäß einer bevorzugten Ausführungsform weist die Führungsscheibe eine innere Stützanordnung auf, die dazu ausgebildet ist, den Auflagebereich der Führungsscheibe abzustützen. Mittels der inneren Stützanordnung wird die Führungsscheibe so stabilisiert und versteift, dass die über das Zugmittel übertragenen Kräfte aufgenommen werden können. Vorzugsweise ist der Auflagebereich der Führungsscheibe als umlaufender Auflagebereich ausgebildet.

Vorzugsweise ist das mindestens eine Gegenrastelement an der inneren Stützanordnung der Führungsscheibe angeordnet. Beispielsweise kann das mindestens eine Gegenrastelement in die innere Stützanordnung integriert werden.

Gemäß einer bevorzugten Ausführungsform weist das Begrenzungsstegelement eine Mehrzahl von Stabilisierungselementen auf, die entlang des Stegbereichs angeordnet sind, wobei jedes Stabilisierungselement einen abgewinkelten Abschnitt aufweist. Dabei wird durch den abgewinkelten Abschnitt ein Profil geschaffen, das das Stabilisierungselement versteift. Dadurch kann eine plastische Deformation des Stegbereichs infolge der seitlich einwirkenden Kräfte vermieden werden. Vorzugsweise ist der Stegbereich des Begrenzungsstegelements als umlaufender Stegbereich ausgebildet.

Vorzugsweise weist jedes Stabilisierungselement einen zur Führungsscheibe hin abgewinkelten Abschnitt auf. Weiter vorzugsweise ist jedes Stabilisierungselement innen am Stegbereich angeordnet. Weiter vorzugsweise sind die Stabilisierungselemente in regelmäßigen Abständen entlang des Stegbereichs angeordnet.

Weiter vorzugsweise ist der abgewinkelte Abschnitt des Stabilisierungselements in axialer Richtung der Rolle oder schräg zur axialen Richtung der Rolle zur Führungsscheibe hin gerichtet. Dabei ist es insbesondere von Vorteil, wenn die Stabilisierungselemente im Querschnitt ein L-förmiges Profil aufweisen.

Gemäß einer bevorzugten Ausführungsform ist an dem Begrenzungsstegelement mindestens eine Positionierfläche angeordnet, wobei die innere Stützanordnung der Führungsscheibe mindestens eine korrespondierende Anlagefläche aufweist. Dabei ist die mindestens eine Positionierfläche dazu ausgelegt, beim Aufstecken des Begrenzungsstegelements auf die Führungsscheibe mit der mindestens einen Anlagefläche der inneren Stützanordnung in Anlage zu kommen.

Vorzugsweise ist das Zusammenwirken zwischen der mindestens einen Positionierfläche und der mindestens einen korrespondierenden Anlagefläche dazu ausgelegt, beim Aufstecken des Begrenzungsstegelements auf die Führungsscheibe eine zentrische Positionierung des Begrenzungsstegelements relativ zur Führungsscheibe zu bewirken. Durch die Positionierflächen des Begrenzungsstegelements und die korrespondierenden Anlageflächen der Führungsscheibe wird eine exakt zentrische Ausrichtung des Begrenzungsstegelements relativ zur Führungsscheibe bewirkt.

Dabei ist es von Vorteil, wenn die mindestens eine Positionierfläche in axialer Richtung ausgerichtet oder schräg zur axialen Richtung ausgerichtet ist. Dadurch wird ein Anliegen der Positionierflächen an den Anlageflächen beim Einstecken ermöglicht.

Es ist von Vorteil, wenn die abgewinkelten Abschnitte der Stabilisierungselemente zugleich als Positionierflächen dienen. Die abgewinkelten Abschnitte erfüllen also eine doppelte Funktion und dienen zum einen zur Stabilisierung und zum anderen als Positionierflächen. Dabei ist es insbesondere vorteilhaft, dass die abgewinkelten Abschnitte in regelmäßen Abständen entlang des Stegbereichs angeordnet sind, weil so eine gleichmäßige Zentrierung erreicht wird.

Vorzugsweise ist der Auflagebereich der Führungsscheibe an seiner Innenseite als Anlagefläche für die mindestens eine Positionierfläche des Begrenzungsstegelements ausgebildet. Vorzugsweise liegen die Außenseiten der abgewinkelten Abschnitte der Stabilisierungselemente an der Innenseite des Auflagebereichs an.

Gemäß einer bevorzugten Ausführungsform weist die innere Stützanordnung der Führungsscheibe mindestens eine Positionierrippe auf, die sich in radialer Richtung von innen nach außen erstreckt, wobei das Begrenzungsstegelement mindestens einen Ausschnitt aufweist, der dazu ausgelegt ist, beim Aufsetzen des Begrenzungsstegelements auf die Führungsscheibe mit der mindestens einen Positionierrippe in Eingriff zu kommen. Der am Begrenzungsstegelement vorgesehene Ausschnitt ist dazu ausgelegt, die Rippe zu umschließen, wobei durch diesen Formschluss zwischen Ausschnitt und Positionierrippe das Begrenzungsstegelement zusätzlich fixiert wird.

Vorzugsweise ist das Zusammenwirken zwischen dem mindestens einen Ausschnitt des Begrenzungsstegelements und der mindestens einen Positionierrippe der inneren Stützanordnung dazu ausgelegt, ein Verdrehen des Begrenzungsstegelements relativ zur Führungsscheibe zu verhindern. Auch bei einem radialen Verrutschen des Zugmittels wird vermieden, dass sich die Führungsscheibe relativ zum Begrenzungsstegelement verdreht und dadurch beispielsweise die Rastelemente beschädigt.

Vorzugsweise ist der mindestens eine Ausschnitt als U-förmiger Ausschnitt ausgebildet.

In einer bevorzugten Ausführungsform ist der mindestens eine Ausschnitt in den abgewinkelten Abschnitten der Stabilisierungselemente angeordnet. Dabei ist der mindestens eine Ausschnitt auf der der Führungsscheibe zugewandten Seite des Begrenzungsstegelements angeordnet, sodass der mindestens eine Ausschnitt beim Aufsetzen des Begrenzungsstegelements auf die Führungsscheibe mit der mindestens einen Positionierrippe in Eingriff kommt.

Vorzugsweise ist an dem Begrenzungsstegelement eine Mehrzahl von Rastelementen vorgesehen. Weiter vorzugsweise ist an der Führungsscheibe eine Mehrzahl von Gegenrastelementen vorgesehen. Dadurch wird eine gleichmäßige Befestigung des Begrenzungsstegelements an der Führungsscheibe ermöglicht.

Gemäß einer bevorzugten Ausführungsform ist das mindestens eine Gegenrastelement jeweils als Rastaufnahme für das mindestens eine Rastelement ausgebildet. Das Rastelement ist dazu ausgelegt, in das als Rastaufnahme ausgebildete Gegenrastelement einzugreifen. Alternativ dazu kann aber auch das mindestens eine Rastelement jeweils als Rastaufnahme für das mindestens eine Gegenrastelement ausgebildet sein.

Vorzugsweise umfasst die mindestens eine Rastaufnahme eine Aussparung oder eine Vertiefung, die dazu ausgebildet ist, dass das mindestens eine Rastelement des Begrenzungsstegelements beim Aufstecken des Begrenzungsstegelements auf die Führungsscheibe in die Aussparung oder die Vertiefung einrastet.

Gemäß einer bevorzugten Ausführungsform ist die mindestens eine Rastaufnahme als ringförmige Rastaufnahme ausgebildet, welche Teil der inneren Stützanordnung der Führungsscheibe ist. Bei dieser Ausführungsform schnappt das mindestens eine Rastelement in mindestens eine an der ringförmigen Rastaufnahme vorgesehene Aussparung oder Vertiefung ein.

Vorzugsweise ist das mindestens eine Rastelement am Stegbereich angeordnet. Weiter vorzugsweise ist eine Mehrzahl von Rastelementen in regelmäßigen Abständen entlang des Stegbereichs angeordnet. Eine von einem Zugmittel seitlich auf den Stegbereich einwirkende Kraft kann auf diese Weise gleichmäßig aufgenommen werden. Weiter vorzugsweise ist das mindestens eine Rastelement innen am Stegbereich angeformt oder angebracht.

Vorzugsweise ist das mindestens eine Rastelement jeweils als gebogenes Blechteil ausgebildet. Auf diese Weise kann das Rastelement federnd ausgebildet sein, sodass das Rastelement beim Aufstecken in das Gegenrastelement einschnappt.

Gemäß einer bevorzugten Ausführungsform ist das Begrenzungsstegelement als Blechteil ausgebildet, wobei das mindestens eine Rastelement als am Stegbereich innen angebrachter oder angeformter gebogener Blechabschnitt ausgebildet ist. Das Begrenzungsstegelement mit den angeformten gebogenen Blechabschnitten kann beispielsweise in einem Stück gefertigt werden.

Vorzugsweise ist das mindestens eine Rastelement jeweils als U-förmig oder V-förmig gebogenes Blechteil ausgebildet, das innen am Stegbereich angeformt ist und sich zur Führungsscheibe hin erstreckt. Weiter vorzugsweise ist das mindestens eine Rastelement einem hakenförmigen Profil entsprechend ausgebildet.

Gemäß einer bevorzugten Ausführungsform weist das mindestens eine Rastelement einen ersten Abschnitt auf, der sich von der Innenseite des Begrenzungsstegelements aus in axialer Richtung oder schräg zur axialen Richtung zur Führungsscheibe hin erstreckt, sowie einen gegenüber dem ersten Abschnitt abgewinkelten zweiten Abschnitt, der sich an den ersten Abschnitt anschließt und sich abgewinkelt in axialer Richtung oder schräg zur axialen Richtung von der Führungsscheibe weg erstreckt. Beispielsweise kann der zweite Abschnitt als federnder Abschnitt ausgebildet sein und in das Gegenrastelement federnd einrasten.

Gemäß einer bevorzugten Ausführungsform kann sich der zweite Abschnitt schräg zur axialen Richtung radial nach innen erstrecken. Gemäß einer alternativen bevorzugten Ausführungsform kann sich der zweite Abschnitt schräg zur axialen Richtung radial nach außen erstrecken. Durch geeignete Anordnung der Gegenrastelemente ist in beiden Fällen die Ausbildung einer Rastverbindung möglich.

Vorzugsweise ist das mindestens eine Rastelement jeweils als federndes Rastelement ausgebildet. Weiter vorzugsweise ist das mindestens eine Rastelement jeweils als federndes Rastelement ausgebildet, welches dazu ausgelegt ist, beim Aufstecken des Begrenzungsstegelements auf die Führungsscheibe mit zumindest einem Gegenrastelement federnd zu verrasten. Auf diese Weise kann eine Schnappverbindung ausgebildet werden.

Vorzugsweise ist das mindestens eine Rastelement jeweils als federndes Rastelement ausgebildet und dazu ausgelegt, nach dem Verrasten mit dem mindestens einen Gegenrastelement seitlich auf den Stegbereich einwirkende Kräfte federnd aufzunehmen. Die federnde Ausbildung des Rastelements hat also den zusätzlichen Vorteil, dass seitlich auf den Stegbereich einwirkende Kräfte durch die elastische Verformung der federnden Rastelemente aufgenommen werden können und nicht zu einer plastischen Deformation oder Zerstörung des Stegbereichs führen. Dabei ist es insbesondere von Vorteil, wenn das mindestens eine Rastelement jeweils als federndes Rastelement ausgebildet ist, das nach dem Verrasten mit dem mindestens einen Gegenrastelement bei seitlich auf den Stegbereich einwirkenden Kräften elastisch deformiert wird, wobei die so entstehende Rückstellkraft den Stegbereich nach dem Ende der Kraftbeaufschlagung in die ursprüngliche Position zurückbewegt.

Vorzugsweise weist die Führungsscheibe eine der ersten Stirnseite gegenüberliegende zweite Stirnseite auf, an der ein Steg angeordnet ist. Bei dieser Ausführungsform wird an beiden Seiten des Auflagebereichs ein Stegbereich zur Führung des Zugmittels bereitgestellt.

Vorzugsweise weist die Führungsscheibe eine der ersten Stirnseite gegenüberliegende zweite Stirnseite auf, auf die ein zweites Begrenzungsstegelement in axialer Richtung aufsteckbar ist. Dabei kann das zweite Begrenzungsstegelement beispielsweise in Aufbau und Funktion dem Begrenzungsstegelement entsprechen. Wahlweise kann also entweder nur auf einer Stirnseite oder auf beiden Stirnseiten ein Begrenzungsstegelement auf die Führungsscheibe aufgesetzt werden.

Vorzugsweise ist die Rolle dazu ausgelegt, ein Zugmittel zu führen. Weiter vorzugsweise handelt es sich bei dem Zugmittel um ein Seil oder um einen Riemen. Insbesondere ist bevorzugt, dass es sich bei dem Zugmittel um eines von folgenden handelt: einen Keilriemen, einen Flachriemen, einen Rundriemen, einen Zahnriemen. Vorzugsweise handelt es sich bei dem Zugmittel um einen Zahnriemen, wobei der Auflagebereich der Führungsscheibe als gezähnter Auflagebereich ausgebildet ist, der dazu ausgelegt ist, mit Zähnen des Zahnriemens in Eingriff zu kommen.

Vorzugsweise ist die Rolle Teil eines Zugmitteltriebs. Weiter vorzugsweise ist die Rolle Teil eines Riementriebs. Insbesondere kann die Rolle beispielsweise Teil eines Zahnriementriebs sein.

Vorzugsweise handelt es sich bei der Rolle um eine Antriebsrolle. Weiter vorzugsweise kann es sich bei der Rolle um eine Antriebsrolle eines Zahnriementriebs eines Küchengeräts handeln. Alternativ dazu kann es sich bei der Rolle vorzugsweise um eine angetriebene Rolle handeln. Alternativ dazu kann es sich bei der Rolle vorzugsweise um eine angetriebene Rolle eines Zahnriementriebs eines Küchengeräts handeln.

Gemäß einer bevorzugten Ausführungsform handelt es sich bei der Führungsscheibe um ein Kunststoffteil. Bevorzugt handelt es sich bei der Führungsscheibe um ein Spritzgussteil. Hier ist der Einsatz des erfindungsgemäßen Begrenzungsstegelements besonders vorteilhaft, weil bei Spritzgussteilen die Ausbildung eines angeformten Flansches herstellungstechnisch schwierig zu realisieren ist, sodass das aufsteckbare Begrenzungsstegelement demgegenüber besonders vorteilhaft ist.

Alternativ dazu handelt es sich bei der Führungsscheibe vorzugsweise um ein Metallteil, insbesondere beispielsweise um ein Teil aus Aluminium oder Stahl.

Vorzugsweise handelt es sich bei dem Begrenzungsstegelement um ein aus Metallblech hergestelltes Teil. Ein derartiges Teil ist einfach zu fertigen, wobei sämtliche beschriebenen Merkmale des Begrenzungsstegelements aus dem Metallblech hergestellt werden können. Insbesondere können aus dem Metallblech federnde Rastelemente hergestellt werden. Dabei ist das Begrenzungsstegelement vorzugsweise einstückig ausgebildet. Gemäß einer bevorzugten Ausführungsform ist das Begrenzungsstegelement durch Stanzen und Biegen hergestellt. Vorzugsweise handelt es sich bei dem Begrenzungsstegelement um ein Blechstanzteil.

In einer bevorzugten Ausführungsform handelt es bei dem Begrenzungsstegelement um ein kreisförmiges Begrenzungsstegelement. Alternativ dazu kann das Begrenzungsstegelement vorzugsweise als ringförmiges Begrenzungsstegelement ausgebildet sein. Bei dieser Ausführungsform weist das Begrenzungsstegelement in der Mitte eine zentrale Öffnung auf. Vorzugweise beträgt der Durchmesser der Rolle mehr als 0,5 cm, weiter vorzugsweise mehr als 2 cm, weiter vorzugsweise mehr als 5 cm. Vorzugsweise beträgt der Durchmesser der Rolle weniger als 50 cm, weiter vorzugsweise weniger als 25 cm, weiter vorzugsweise weniger als 15 cm. Vorzugsweise beträgt die Höhe der Rolle mehr als 0,3 cm, weiter vorzugsweise mehr als 1 cm, weiter vorzugsweise mehr als 2 cm. Vorzugsweise beträgt die Höhe der Rolle weniger als 40 cm, weiter vorzugsweise weniger als 20 cm, weiter vorzugsweise weniger als 8 cm.

Vorzugsweise handelt es sich bei dem erfindungsgemäßen Zugmitteltrieb um einen Riementrieb und bei dem Zugmittel um einen Riemen. Weiter vorzugsweise handelt es sich bei dem Zugmitteltrieb um einen Zahnriementrieb und bei dem Zugmittel um einen Zahnriemen.

### Kurzbeschreibung der Zeichnungen

Weitere vorteilhafte Ausgestaltungen werden nachfolgend anhand eines in den Zeichnungen dargestellten Ausführungsbeispiels, auf welches die Erfindung jedoch nicht beschränkt ist, näher beschrieben.

Es zeigen schematisch:
- Figur 1: zeigt einen Schnitt durch eine Küchenmaschine mit einem Zahnriementrieb.
- Figur 2: zeigt ein Verrutschen des Zahnriemens in axialer Richtung.
- Figur 3: zeigt eine Rolle, die aus einer Führungsscheibe und einem auf eine Stirnseite der Führungsscheibe aufgesteckten Begrenzungsstegelement besteht.
- Figur 4a: zeigt, wie das Begrenzungsstegelement auf die Stirnseite der Führungsscheibe aufgeschoben wird.
- Figur 4b: zeigt das Begrenzungsstegelement nach der Verrastung mit der Führungsscheibe.

### Detaillierte Beschreibung von Ausführungen der Erfindung

Bei der nachfolgenden Beschreibung von bevorzugten Ausführungsformen der vorliegenden Erfindung bezeichnen gleiche Bezugszeichen gleiche oder vergleichbare Komponenten.

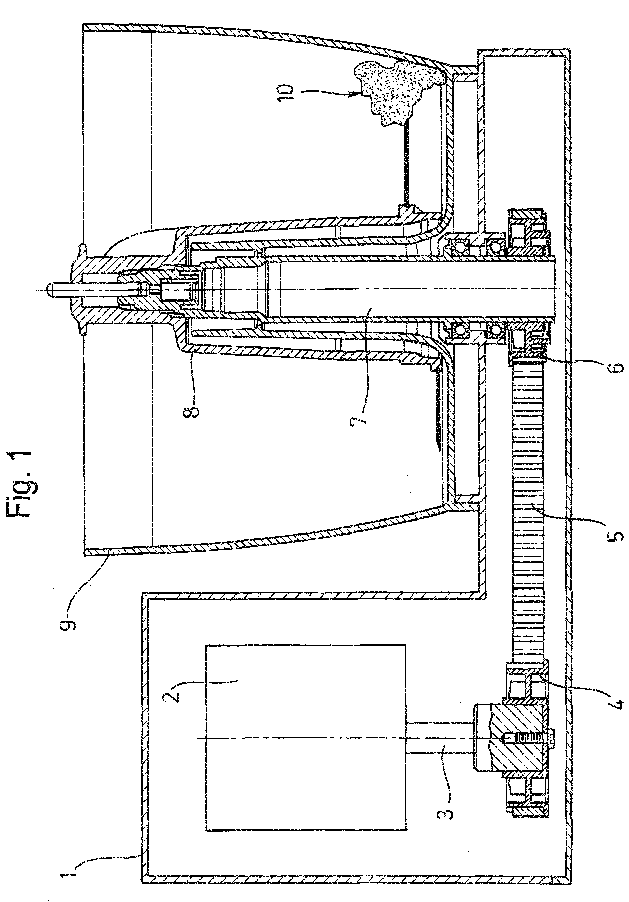

In Figur 1 ist ein Querschnitt durch eine Küchenmaschine gezeigt, welche einen Zahnriementrieb aufweist. Die Antriebseinheit 1 der Küchenmaschine umfasst einen Motor 2, der eine Antriebswelle 3 rotierend antreibt. Die Antriebswelle 3 ist drehfest mit einer ersten Rolle 4 verbunden, die entlang ihres Umfangs einen gezähnten Auflagebereich aufweist, dessen Zahnung mit den Zähnen des Zahnriemens 5 in Eingriff stehen. Über den Zahnriementrieb wird das an der Antriebswelle 3 erzeugte Drehmoment zu der zweiten Rolle 6 und zu der mit der zweiten Rolle 6 drehfest verbundenen angetriebenen Welle 7 übertragen. Hierzu weist auch die zweite Rolle 6 einen entlang des Umfangs vorgesehenen gezähnten Auflagebereich für den Zahnriemen 5 auf, dessen Zahnung in die des Zahnriemens 5 eingreift. Die angetriebene Welle 7 ist dazu ausgebildet, einen aufsteckbaren Werkzeugaufsatz 8 rotierend anzutreiben. Auf diese Weise kann ein in einer Schüssel 9 befindliches Füllgut mittels des Werkzeugaufsatzes 8 bearbeitet werden.

Bei der Verarbeitung des Füllguts mittels des Werkzeugaufsatzes 8 kann der Fall auftreten, dass auf den Werkzeugaufsatz 8 eine asymmetrische Belastung einwirkt, wie dies in Figur 1 durch den Pfeil 10 veranschaulicht ist. Diese asymmetrische Belastung führt zu einer Auslenkung der angetriebenen Welle 7 und der mit dieser Welle verbundenen zweiten Rolle 6, was zur Folge hat, dass der Zahnriemen 5 in axialer Richtung nach unten abrutscht.

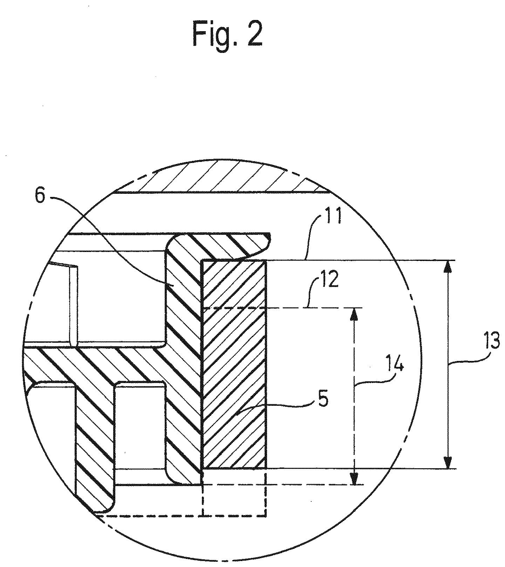

Dies ist anhand von Figur 2 veranschaulicht, welche einen Schnitt durch die zweite Rolle 6 zusammen mit dem Zahnriemen 5 zeigt. Dabei ist die ursprüngliche Position des Zahnriemens 5 als schraffierter Bereich dargestellt, wobei sich die Oberkante des Zahnriemens 5 ursprünglich an der Position 11 befindet. Wenn der Zahnriemen 5 in axialer Richtung nach unten verrutscht, befindet sich die Oberkante des Zahnriemens 5 an der nach unten versetzten Position 12, wobei die Lage des nach unten verrutschten Zahnriemens 5 in Figur 2 gestrichelt dargestellt ist. Infolge des Abrutschens des Zahnriemens 5 nach unten verringert sich der Kontaktbereich zwischen der zweiten Rolle 6 und dem Zahnriemen 5. Während der ursprüngliche Kontaktbereich zwischen der zweiten Rolle 6 und dem Zahnriemen 5 durch den Doppelpfeil 13 veranschaulicht ist, ist der Kontaktbereich nach dem Abrutschen des Zahnriemens 5 durch den deutlich kürzeren Doppelpfeil 14 charakterisiert. Infolge der Verkleinerung des Kontaktbereichs zwischen der zweiten Rolle 6 und dem Zahnriemen 5 verschlechtert sich die Drehmomentübertragung. Dadurch kann es zusätzlich zu einem radialen Verrutschen des Zahnriemens kommen. Durch die beschriebenen Vorgänge wird die Abnutzung des Zahnriemens 5 und der zweiten Rolle 6 begünstigt.

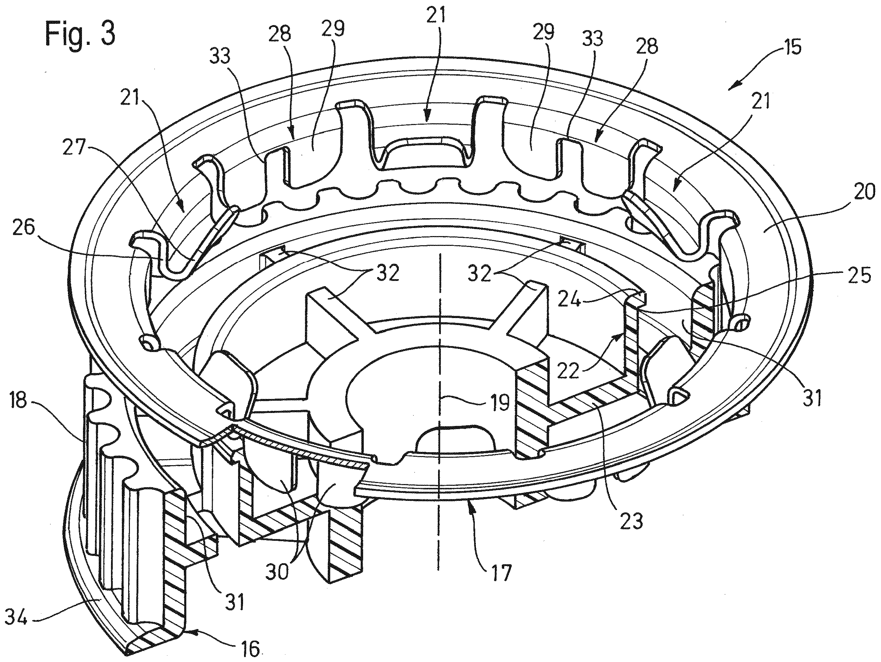

Um das axiale Abrutschen des Zahnriemens und allgemeiner eines Zugmittels zu verhindern, wird erfindungsgemäß vorgeschlagen, ein Begrenzungsstegelement auf eine Stirnseite einer Führungsscheibe aufzusetzen, um das Zugmittel und insbesondere einen Zahnriemen in der gewünschten axialen Position zu halten. In Figur 3 ist eine erfindungsgemäße Rolle 15 gezeigt, welche eine Führungsscheibe 16 und ein auf eine Stirnseite der Führungsscheibe 16 aufsteckbares Begrenzungsstegelement 17 umfasst. Um das Begrenzungsstegelement 17 übersichtlich darstellen zu können, ist die in Figur 3 gezeigte Rolle 15 im Vergleich zu der in Figur 1 gezeigten ersten Rolle 4 und zweiten Rolle 6 um 180° verdreht dargestellt. Bei den in Figur 1 gezeigten Rollen 4 und 6 würde man das Begrenzungsstegelement also jeweils auf die zur Standfläche der Küchenmaschine hin orientierte Unterseite der ersten Rolle 4 und der zweiten Rolle 6 aufstecken.

Die Führungsscheibe 16 weist einen entlang des Umfangs vorgesehenen Auflagebereich 18 zur Führung eines Zahnriemens auf, wobei der umlaufende Auflagebereich 18 eine Zahnung aufweist, die dazu ausgelegt ist, in die Zähne des Zahnriemens einzugreifen. Die in Figur 3 gezeigte Anordnung von Führungsscheibe 16 und Begrenzungsstegelement 17 eignet sich jedoch nicht nur für Zahnriemen, sondern darüber hinaus auch für beliebige andere Zugmittel wie beispielsweise Seile, Flachriemen, Rundriemen, Keilriemen, etc. Um das Abrutschen des jeweiligen Zugmittels in der axialen Richtung 19 zu verhindern, weist das Begrenzungsstegelement 17 einen umlaufenden Stegbereich 20 auf, der sich über den Radius des umlaufenden Auflagebereichs 18 hinaus radial nach außen erstreckt. Dieser umlaufende Stegbereich 20 ist dazu ausgebildet, das jeweilige Zugmittel in der gewünschten axialen Position zu halten.

Zur Befestigung des Begrenzungsstegelements 17 an der Stirnseite der Führungsscheibe 16 weist das Begrenzungsstegelement 17 eine Mehrzahl von Rastelementen 21 auf, die an der Innenseite des umlaufenden Stegbereichs 20 vorgesehen sind. Diese Rastelemente 21 sind entlang des umlaufenden Stegbereichs 20 in regelmäßigen Abständen angeordnet, wobei das in Figur 3 gezeigte Begrenzungsstegelement 17 insgesamt sechs Rastelemente 21 aufweist. An der Führungsscheibe 16 ist mindestens ein Gegenrastelement vorgesehen, mit dem die Rastelemente 21 verrastet werden können. Die in Figur 3 gezeigte Führungsscheibe 16 weist eine ringförmige Rastaufnahme 22 auf, in die die Rastelemente 21 einrasten können. Die ringförmige Rastaufnahme 22 ist als Teil der inneren Stützanordnung 23 der Führungsscheibe 16 ausgebildet. Die innere Stützanordnung 23 ist zur Abstützung und Stabilisierung des umlaufenden Auflagebereichs 18 der Führungsscheibe 16 vorgesehen. Wenn das Begrenzungsstegelement 17 in axialer Richtung 19 auf die Stirnseite der Führungsscheibe 16 aufgesetzt wird, dann werden die federnden Rastelemente 21 zunächst durch den Vorsprung 24 nach außen gedrückt und rasten dann in die Vertiefung 25 ein. Das Begrenzungsstegelement 17 wird also durch die Verrastung der Rastelemente 21 mit der ringförmigen Rastaufnahme 22 an der ersten Stirnseite der Führungsscheibe 16 lösbar befestigt. Schraubverbindungen sind für die Befestigung des Begrenzungsstegelements 17 nicht erforderlich.

Jedes der federnden Rastelemente 21 umfasst einen ersten Abschnitt 26, der sich von der Innenseite des umlaufenden Stegbereichs 20 aus in axialer Richtung 19 oder schräg zur axialen Richtung 19 zur Führungsscheibe 16 hin erstreckt. An den ersten Abschnitt 26 schließt sich ein relativ zum ersten Abschnitt 26 abgewinkelter zweiter Abschnitt 27 an, der sich in axialer Richtung 19 oder schräg zur axialen Richtung 19 von der Führungsscheibe 16 weg erstreckt. Bei der in Figur 3 gezeigten Ausführungsform verläuft der zweite Abschnitt 27 der Rastelemente 21 jeweils schräg radial nach innen. Es sind jedoch auch Ausführungsformen denkbar, bei denen der zweite Abschnitt 27 relativ zum ersten Abschnitt 26 schräg radial nach außen verlaufend angeordnet ist, wobei in diesem Fall die zugehörigen Gegenrastelemente geeignet angeordnet werden müssten.

Zur Versteifung des umlaufenden Stegbereichs 20 sind entlang des umlaufenden Stegbereichs 20 eine Mehrzahl von Stabilisierungselementen 28 vorgesehen, die jeweils einen innen am umlaufenden Stegbereich 20 angeordneten und zur Führungsscheibe 16 hin abgewinkelten Abschnitt 29 aufweisen. Im Querschnitt weist jedes der Stabilisierungselemente 28 daher ein L-förmiges Profil auf, sodass der umlaufende Stegbereich 20 durch die sechs in regelmäßigen Abständen entlang des umlaufenden Stegbereichs 20 angeordneten Stabilisierungselemente 28 versteift wird.

Bei dem in Figur 3 gezeigten Beispiel dienen Außenseiten der abgewinkelten Abschnitte 29 der Stabilisierungselemente 28 zugleich als Positionierflächen 30, welche eine zentrische Positionierung des Begrenzungsstegelements 17 relativ zur Führungsscheibe 16 bewirken. Hierzu ist zu den Positionierflächen 30 eine zugehörige Anlagefläche 31 vorgesehen. Bei dem in Figur 3 gezeigten Beispiel ist die Innenseite des umlaufenden Auflagebereichs 18 als Anlagefläche 31 ausgebildet. Die entlang des umlaufenden Stegbereichs 20 angeordneten Positionierflächen 30 an den Außenseiten der abgewinkelten Abschnitte 29 sind dazu ausgebildet, beim Aufstecken des Begrenzungsstegelements 17 auf die Führungsscheibe 16 ringsum an der Anlagefläche 31 anzulegen und auf diese Weise eine zentrische Positionierung des Begrenzungsstegelements 17 relativ zur Führungsscheibe 16 zu bewirken. Auf diese Weise wird gewährleistet, dass das Begrenzungsstegelement 17 koaxial zur Führungsscheibe 16 angeordnet ist.

Darüber hinaus ist an der inneren Stützanordnung 23 eine Mehrzahl von Positionierrippen 32 vorgesehen, die sich in radialer Richtung von innen nach außen erstrecken. In den abgewinkelten Abschnitten 29 der Stabilisierungselemente 28 sind jeweils U-förmige Ausschnitte 33 ausgebildet. Diese U-förmigen Ausschnitte 33 sind dazu ausgelegt, beim Aufstecken des Begrenzungsstegelements 17 auf die Führungsscheibe 16 mit den Positionierrippen 32 in Eingriff zu kommen. Durch das Zusammenwirken zwischen den U-förmigen Ausschnitten 33 und den Positionierrippen 32 wird verhindert, dass sich das Begrenzungsstegelement 17 relativ zur Führungsscheibe 16 verdrehen kann. Dadurch wird insbesondere verhindert, dass bei einem radialen Verrutschen des Zahnriemens die Rastelemente 21 beschädigt werden.

Bei der in Figur 3 gezeigt Ausführungsform ist auf der vom Begrenzungsstegelement 17 abgewandten Stirnseite der Führungsscheibe 16 ein zweiter Steg 34 vorgesehen, der an dem umlaufenden Auflagebereich 18 angebracht oder angeformt ist. Alternativ dazu ist es auch möglich, auf die zweite Stirnseite der Führungsscheibe 16 ein weiteres Begrenzungsstegelement aufzusetzen und mit der Führungsscheibe 16 zu verrasten, wobei das zweite Begrenzungsstegelement in Struktur und Funktion entsprechend dem Begrenzungsstegelement 17 ausgebildet sein kann.

Die Führungsscheibe 16 kann vorzugsweise aus Kunststoff bestehen. Beispielsweise kann die Führungsscheibe 16 einschließlich des umlaufenden Auflagebereichs 18 und der inneren Stützanordnung 23 als Spritzgussteil hergestellt werden, wobei sowohl die innere Stützanordnung 23 als auch der umlaufende Auflagebereich 18 mittels Spritzguss gefertigt werden können. Alternativ dazu kann die Führungsscheibe 16 aus Metall ausgebildet sein, beispielsweise aus Aluminium oder Edelstahl.

Das Begrenzungsstegelement 17 ist vorzugsweise aus Metallblech hergestellt, wobei die in Figur 3 gezeigte Form durch Stanzen und anschließendes Biegen eines Metallblechs hergestellt werden kann. Das Begrenzungsstegelement 17 kann einstückig aus Blech gefertigt werden. Die abgewinkelten Abschnitte 29 der Stabilisierungselemente 28 können beispielsweise hergestellt werden, indem am umlaufenden Stegbereich 20 angeformte Blechabschnitte in Richtung zur Führungsscheibe 16 hin gebogen werden. Die federnden Rastelemente 21 erhält man, indem der erste Abschnitt 26 in Richtung zur Führungsscheibe 16 hin gebogen und der zweite Abschnitt 27 in Richtung von der Führungsscheibe 16 weg schräg nach innen gebogen wird, sodass ein hakenförmiges Profil des federnden Rastelements 21 entsteht.

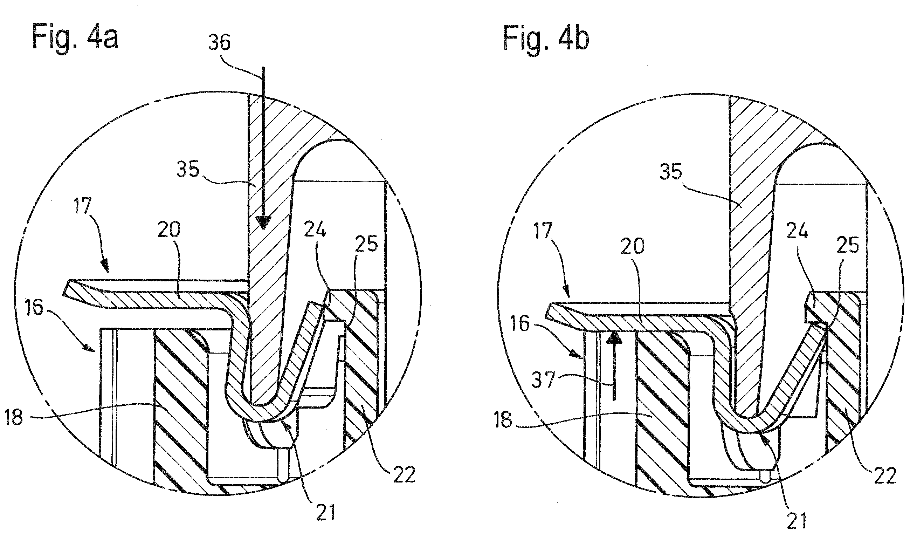

In den Figuren 4a und 4b ist gezeigt, wie das Begrenzungsstegelement 17 mittels eines Montagewerkzeugs 35 auf die Stirnseite der Führungsscheibe 16 aufgesetzt wird. Hierzu werden die Rastelemente 21 vom Montagewerkzeug 35 erfasst und in den Zwischenraum zwischen dem umlaufenden Auflagebereich 18 und der ringförmigen Rastaufnahme 22 in Richtung des Pfeils 36 eingeschoben. Wie in Figur 4a gezeigt, wird der zweite Abschnitt 27 des jeweiligen Rastelements 21 durch den Vorsprung 24 gedrückt, wobei der Vorsprung 24 vorzugsweise eine Anlaufschräge aufweist. Nachdem der zweite Abschnitt 27 den Vorsprung 24 passiert hat, kann der zweite Abschnitt 27 beispielsweise wie in Figur 4b gezeigt infolge seiner federnden Vorspannung in die Vertiefung 25 der ringförmigen Rastaufnahme 22 einschnappen, sodass das Begrenzungsstegelement 17 ringsum durch das Zusammenwirken der Rastelemente 21 mit der ringförmigen Rastaufnahme 22 fixiert ist. Alternativ dazu könnte der zweite Abschnitt 27 aktiv durch das Montagewerkzeug 35 in die Vertiefung 25 hineingedrückt werden. Dadurch liegt der umlaufende Stegbereich 20 stabil auf dem umlaufenden Auflagebereich 18 auf. Wenn durch das Zugmittel seitlich eine Kraft in Richtung des Pfeils 37 auf den umlaufenden Stegbereich 20 ausgeübt wird, wird der Stegbereich 20 elastisch verformt und kann so die Kraft aufnehmen. Nach dem Ende der Kraftbeaufschlagung kehrt der umlaufende Stegbereich 20 jedoch wieder in seine Ausgangsstellung zurück.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausführungsformen von Bedeutung sein.

### Bezugszeichenliste

- 1: Antriebseinheit
- 2: Motor
- 3: Antriebswelle
- 4: erste Rolle
- 5: Zahnriemen
- 6: zweite Rolle
- 7: angetriebene Welle
- 8: Werkzeugaufsatz
- 9: Schüssel
- 10: Pfeil
- 11: ursprüngliche Position der Oberkante des Zahnriemens
- 12: versetzte Position der Oberkante des Zahnriemens
- 13: Doppelpfeil
- 14: Doppelpfeil
- 15: Rolle
- 16: Führungsscheibe
- 17: Begrenzungsstegelement
- 18: umlaufender Auflagebereich
- 19: axiale Richtung
- 20: umlaufender Stegbereich
- 21: Rastelement
- 22: ringförmige Rastaufnahme
- 23: innere Stützanordnung
- 24: Vorsprung
- 25: Vertiefung
- 26: erster Abschnitt des Rastelements
- 27: zweiter Abschnitt des Rastelements
- 28: Stabilisierungselement
- 29: abgewinkelter Abschnitt
- 30: Positionierfläche
- 31: Anlagefläche
- 32: Positionierrippe
- 33: U-förmiger Ausschnitt
- 34: zweiter Steg
- 35: Montagewerkzeug
- 36: Pfeil
- 37: Pfeil

## Patentansprüche

1. Küchengerät, mit einem Zugmitteltrieb, der eine Rolle umfasst, welche aufweist eine Führungsscheibe (16) mit einem entlang des Umfangs vorgesehenen Auflagebereich (18) zur Führung eines Zugmittels,
**gekennzeichnet durch**
ein Begrenzungsstegelement (17), das auf eine erste Stirnseite der Führungsscheibe (16) aufgesteckt ist,
wobei das Begrenzungsstegelement (17) einen Stegbereich (20) aufweist, der sich über den Radius des Auflagebereichs (18) hinaus radial nach außen erstreckt,
wobei an dem Begrenzungsstegelement (17) mindestens ein Rastelement (21) und an der Führungsscheibe (16) mindestens ein Gegenrastelement vorgesehen ist,
wobei das mindestens eine Rastelement (21) dazu ausgelegt ist, beim Aufstecken des Begrenzungsstegelements (17) auf die erste Stirnseite der Führungsscheibe (16) mit mindestens einem der Gegenrastelemente zu verrasten.

2. Küchengerät nach Anspruch 1, **dadurch gekennzeichnet, dass** die Führungsscheibe (16) eine innere Stützanordnung (23) aufweist, die dazu ausgebildet ist, den Auflagebereich (18) der Führungsscheibe (16) abzustützen.

3. Küchengerät nach Anspruch 1 oder Anspruch 2, **dadurch gekennzeichnet, dass** das Begrenzungsstegelement (17) eine Mehrzahl von Stabilisierungselementen (28) aufweist, die entlang des Stegbereichs (20) angeordnet sind, wobei jedes Stabilisierungselement (28) einen abgewinkelten Abschnitt (29) aufweist.

4. Küchengerät nach einem der Ansprüche 2 bis 3, **dadurch gekennzeichnet, dass** an dem Begrenzungsstegelement (17) mindestens eine Positionierfläche (30) angeordnet ist, wobei die innere Stützanordnung (23) der Führungsscheibe (16) mindestens eine korrespondierende Anlagefläche (31) aufweist, und wobei die mindestens eine Positionierfläche (30) dazu ausgelegt ist, beim Aufstecken des Begrenzungsstegelements (17) auf die Führungsscheibe (16) mit der der mindestens einen Anlagefläche (31) der inneren Stützanordnung (23) in Anlage zu kommen.

5. Küchengerät nach Anspruch 4, **dadurch gekennzeichnet, dass** die abgewinkelten Abschnitte (29) der Stabilisierungselemente (28) zugleich als Positionierflächen (30) dienen.

6. Küchengerät nach Anspruch 4 oder Anspruch 5, **dadurch gekennzeichnet, dass** der Auflagebereich (18) der Führungsscheibe (16) an seiner Innenseite als Anlagefläche (31) für die mindestens eine Positionierfläche (30) des Begrenzungsstegelements (17) ausgebildet ist.

7. Küchengerät nach einem der Ansprüche 2 bis 6, **dadurch gekennzeichnet, dass** die innere Stützanordnung (23) der Führungsscheibe (16) mindestens eine Positionierrippe (32) aufweist, die sich in radialer Richtung von innen nach außen erstreckt, wobei das Begrenzungsstegelement (17) mindestens einen Ausschnitt (33) aufweist, der dazu ausgelegt ist, beim Aufsetzen des Begrenzungsstegelements (17) auf die Führungsscheibe (16) mit der mindestens einen Positionierrippe (32) in Eingriff zu kommen.

8. Küchengerät nach einem der Ansprüche 1 bis 7, **dadurch gekennzeichnet, dass** das mindestens eine Gegenrastelement jeweils als Rastaufnahme (22) für das mindestens eine Rastelement (21) ausgebildet ist.

9. Küchengerät nach einem der Ansprüche 1 bis 8, **dadurch gekennzeichnet, dass** das mindestens eine Rastelement (21) einen ersten Abschnitt (26) aufweist, der sich von der Innenseite des Begrenzungsstegelements (17) aus in axialer Richtung (19) oder schräg zur axialen Richtung (19) zur Führungsscheibe (16) hin erstreckt, sowie einen gegenüber dem ersten Abschnitt (26) abgewinkelten zweiten Abschnitt (27), der sich an den ersten Abschnitt (26) anschließt und sich abgewinkelt in axialer Richtung (19) oder schräg zur axialen Richtung (19) von der Führungsscheibe (16) weg erstreckt.

10. Küchengerät nach einem der Ansprüche 1 bis 9, **dadurch gekennzeichnet, dass** das mindestens eine Rastelement (21) jeweils als federndes Rastelement ausgebildet ist.

11. Küchengerät nach einem der Ansprüche 1 bis 10, **dadurch gekennzeichnet, dass** das mindestens eine Rastelement (21) jeweils als federndes Rastelement ausgebildet und dazu ausgelegt ist, nach dem Verrasten mit dem mindestens einen Gegenrastelement seitlich auf den Stegbereich (20) einwirkende Kräfte federnd aufzunehmen.

12. Küchengerät nach einem der Ansprüche 1 bis 11, **dadurch gekennzeichnet, dass** es sich bei der Führungsscheibe (16) um ein Kunststoffteil handelt.

13. Küchengerät nach einem der Ansprüche 1 bis 12, **dadurch gekennzeichnet, dass** es sich bei dem Begrenzungsstegelement (17) um ein aus Metallblech hergestelltes Teil handelt.

## Claims

1. Kitchen appliance, with a belt drive that comprises a roller which has a guide plate (16) with a locating region (18) provided along the circumference for guiding a tensioning means,
**characterised by**
a delimiting web element (17), which is attached to a first end face of the guide plate (16),
wherein the delimiting web element (17) has a web region (20), which extends radially outwards beyond the radius of the locating region (18),
wherein at least one latching element (21) is provided on the delimiting web element (17) and at least one mating latching element is provided on the guide plate (16), wherein the at least one latching element (21) is designed to latch to at least one of the mating latching elements when attaching the delimiting web element (17) to the first end face of the guide plate (16).

2. Kitchen appliance according to claim 1, **characterised in that** the guide plate (16) has an inner supporting arrangement (23), which is embodied to support the locating region (18) of the guide plate (16).

3. Kitchen appliance according to claim 1 or claim 2, **characterised in that** the delimiting web element (17) has a plurality of stabilising elements (28), which are arranged along the web region (20), wherein each stabilising element (28) has an angled section (29).

4. Kitchen appliance according to one of claims 2 to 3, **characterised in that** at least one positioning area (30) is arranged on the delimiting web element (17), wherein the inner supporting arrangement (23) of the guide plate (16) has at least one corresponding contact area (31), and wherein the at least one positioning area (30) is designed to come into contact with the at least one contact area (31) of the inner supporting arrangement (23) when attaching the delimiting web element (17) to the guide plate (16).

5. Kitchen appliance according to claim 4, **characterised in that** the angled sections (29) of the stabilising elements (28) concurrently serve as positioning areas (30).

6. Kitchen appliance according to claim 4 or claim 5, **characterised in that** the locating region (18) of the guide plate (16) is embodied on its inner side as a contact area (31) for the at least one positioning area (30) of the delimiting web element (17).

7. Kitchen appliance according to one of claims 2 to 6, **characterised in that** the inner supporting arrangement (23) of the guide plate (16) has at least one positioning rib (32), which extends outwards from the inside in the radial direction, wherein the delimiting web element (17) has at least one cutout (33), which is designed to come into engagement with the at least one positioning rib (32) when attaching the delimiting web element (17) to the guide plate (16).

8. Kitchen appliance according to one of claims 1 to 7, **characterised in that** the at least one mating latching element is in each case embodied as latching receptacle (22) for the at least one latching element (21).

9. Kitchen appliance according to one of claims 1 to 8, **characterised in that** the at least one latching element (21) has a first section (26), which extends out from the inner side of the delimiting web element (18) in the axial direction (19) or towards the guide plate (16) obliquely in relation to the axial direction (19), as well as a second section (27) at an angle to the first section (26), which adjoins the first section (26) and extends away from the guide plate (16) at an angle in the axial direction (19) or obliquely in relation to the axial direction (19).

10. Kitchen appliance according to one of claims 1 to 9, **characterised in that** the at least one latching element (21) is in each case embodied as a resilient latching element.

11. Kitchen appliance according to one of claims 1 to 10, **characterised in that** the at least one latching element (21) is in each case embodied as a resilient latching element and is designed, following the latching to the at least one mating latching element, to absorb forces acting on the side of the web region (20) in a resilient manner.

12. Kitchen appliance according to one of claims 1 to 11, **characterised in that** the guide plate (16) involves a plastic part.

13. Kitchen appliance according to one of claims 1 to 12, **characterised in that** the delimiting web element (17) involves a part that is produced from sheet metal.

## Revendications

1. Appareil de cuisine, avec un mécanisme de traction, qui comprend un rouleau, lequel présente un disque de guidage (16) avec une zone d'appui (18) prévue le long de la périphérie et destinée au guidage d'un moyen de traction, **caractérisé par** un élément formant rebord de délimitation (17) qui est accroché sur une première face avant du disque de guidage (16), dans lequel l'élément formant rebord de délimitation (17) présente une zone de rebord (20) qui s'étend radialement vers l'extérieur sur le rayon de la zone d'appui (18), dans lequel au niveau de l'élément formant rebord de délimitation (17) au moins un élément d'enclenchement (21) est prévu et au niveau du disque de guidage (16) au moins un élément de contre-enclenchement est prévu, dans lequel l'au moins un élément d'enclenchement (21) est conçu pour s'enclencher lors de l'accrochage de l'élément formant rebord de délimitation (17) sur la première face avant du disque de guidage (16) avec au moins un des éléments de contre-enclenchement.

2. Appareil de cuisine selon la revendication 1, **caractérisé en ce que** le disque de guidage (16) présente un agencement de soutien interne (23) qui est configuré pour soutenir la zone d'appui (18) du disque de guidage (16).

3. Appareil de cuisine selon la revendication 1 ou la revendication 2, **caractérisé en ce que** l'élément formant rebord de délimitation (17) présente une pluralité d'éléments de stabilisation (28) qui sont disposés le long de la zone de rebord (20), dans lequel chaque élément de stabilisation (28) présente une section formant un angle (29).

4. Appareil de cuisine selon l'une quelconque des revendications 2 à 3, **caractérisé en ce que**, au niveau de l'élément formant rebord de délimitation (17), au moins une surface de positionnement (30) est disposée, dans lequel l'agencement de soutien interne (23) du disque de guidage (16) présente au moins une surface de contact (31) correspondante, et dans lequel l'au moins une surface de positionnement (30) est conçue pour venir en contact avec l'au moins une surface de contact (31) de l'agencement de soutien interne (23) lors de l'accrochage de l'élément formant rebord de délimitation (17) sur le disque de guidage (16).

5. Appareil de cuisine selon la revendication 4, **caractérisé en ce que** les sections formant un angle (29) des éléments de stabilisation (28) servent en même temps de surfaces de positionnement (30).

6. Appareil de cuisine selon la revendication 4 ou la revendication 5, **caractérisé en ce que** la zone d'appui (18) du disque de guidage (16) est réalisée au niveau de sa face interne en tant que surface de contact (31) pour l'au moins une surface de positionnement (30) de l'élément formant rebord de délimitation (17).

7. Appareil de cuisine selon l'une quelconque des revendications 2 à 6, **caractérisé en ce que** l'agencement de soutien interne (23) du disque de guidage (16) présente au moins une nervure de positionnement (32) qui s'étend de l'intérieur vers l'extérieur dans la direction radiale, dans lequel l'élément formant rebord de délimitation (17) présente au moins une section (33) qui est conçue pour venir en prise avec l'au moins une nervure de positionnement (32) lors de la pose de l'élément formant rebord de délimitation (17) sur le disque de guidage (16).

8. Appareil de cuisine selon l'une quelconque des revendications 1 à 7, **caractérisé en ce que** l'au moins un élément de contre-enclenchement est respectivement réalisé en tant que logement d'enclenchement (22) pour l'au moins un élément d'enclenchement (21).

9. Appareil de cuisine selon l'une quelconque des revendications 1 à 8, **caractérisé en ce que** l'au moins un élément d'enclenchement (21) présente une première section (26) qui s'étend depuis la face interne de l'élément formant rebord de délimitation (17) dans la direction axiale (19) ou de manière inclinée par rapport à la direction axiale (19) vers le disque de guidage (16), ainsi qu'une seconde section (27) formant un angle par rapport à la première section (26), laquelle seconde section se raccorde à la première section (26) et s'éloigne du disque de guidage (16) en formant un angle dans la direction axiale (19) ou de manière oblique par rapport à la direction axiale (19).

10. Appareil de cuisine selon l'une quelconque des revendications 1 à 9, **caractérisé en ce que** l'au moins un élément d'enclenchement (21) est réalisé respectivement en tant qu'élément d'enclenchement élastique.

11. Appareil de cuisine selon l'une quelconque des revendications 1 à 10, **caractérisé en ce que** l'au moins un élément d'enclenchement (21) est respectivement réalisé en tant qu'élément d'enclenchement élastique et conçu pour absorber de manière élastique des forces agissant latéralement sur la zone de rebord (20) après l'enclenchement avec l'au moins un élément de contre-enclenchement.

12. Appareil de cuisine selon l'une quelconque des revendications 1 à 11, **caractérisé en ce que** dans le cas du disque de guidage (16) il s'agit d'une pièce en matière plastique.

13. Appareil de cuisine selon l'une quelconque des revendications 1 à 12, **caractérisé en ce que** dans le cas de l'élément formant rebord de délimitation (17) il s'agit d'une pièce produite à partir d'une tôle métallique.
